# EUROPEAN PATENT APPLICATION

(11) **EP 4 141 040 A1**
(43) Date of publication of application: **01.03.2023**
(21) Application number: 21867018.0
(22) Date of filing: 24.08.2021
(51) Int. Cl.: C08G 18/66, C08G 18/40, C08J 9/00, C08K 3/013, C08K 3/36, C08K 3/26

(54) **POLYURETHANE FOAM COMPOSITION AND POLYURETHANE FOAM COMPRISING CURED PRODUCT THEREOF**

(30) Priority: 09.09.2020 KR 20200115233
(71) Applicant: Lg Chem, Ltd., Seoul 07336 (KR)
(72) Inventor: YANG, In Suk, Daejeon 34122 (KR); KIM, Jin Woo, Daejeon 34122 (KR); CHOI, Sang Hun, Daejeon 34122 (KR)
(74) Representative: Plasseraud IP
(86) International application number: PCT/KR2021/011295
(87) International publication number: WO 2022/055152

(57) **Abstract**

The present invention relates to a polyurethane foam composition and polyurethane foam including a cured product thereof.

## Description

### Technical Field

The present invention claims the benefit of the filing date of Korean Patent Application No. 10-2020-0115233, filed with the Korean Intellectual Property Office on September 9, 2020, the entire disclosure of which is incorporated herein.

The present invention relates to a polyurethane foam composition and polyurethane foam including a cured product thereof.

### Background Art

Polyurethane foam is relatively inexpensive, is easily molded, and has high elasticity, and thus it is widely used for daily necessities and automobile parts. However, when the polyurethane foam is used in electronic goods, etc., a problem arises in that, once the flammable polyurethane foam catches fire due to a short circuit, it burns in an uncontrolled manner, resulting in product damage, or even fire or explosion.

In order to overcome this problem, a method of imparting flame retardancy to polyurethane foam by laminating a flame-retardant sheet or panel onto one surface of the polyurethane foam has been mainly used. However, since this method is not a method of fundamentally imparting flame retardancy to the polyurethane foam, the flame retardant effect is limited. In addition, this method has problems in that it makes the production process complicated and increases the production cost. In addition, in order to impart flame retardancy to the polyurethane foam itself, a flame retardant composed of a halogen compound such as a bromine compound or a chlorine compound has been added thereto, but this flame retardant may cause human and environment-related problems due to toxic gas during combustion.

Meanwhile, polyurethane foam is used as a buffer for buffering the volume change of battery cells during charging and discharging. In general, battery cells are used in such a manner that the volumes thereof increase during charging. In this case, polyurethane foam is used as a sealing agent between the battery cells in production of the battery cells in order to prevent problems such as explosion by alleviating the volume expansion of the battery.

In an automated process of assembling a battery pack, polyurethane foam should be sucked to a vacuum suction plate in the automated process. However, if the suction pressure is excessively low, the polyurethane foam is not applied to the automated process, because a problem arises in that the polyurethane foam is not sucked to the vacuum suction plate at a pressure of a required level, and thus a product cannot be transferred. In addition, if the suction pressure is excessively low, a phenomenon may arise in which the suction plate and the polyurethane foam are separated from each other in a process of laminating a tape.

In order to increase this suction pressure, an attempt was made to increase the suction pressure by increasing the density of the polyurethane foam, but problems in terms of cost and a process after suction also occurred.

In order to solve the above-described problems, it is necessary to develop foam having excellent flame retardancy and suction properties and low density.

### DISCLOSURE

### Technical Problem

An object of the present invention is to provide a polyurethane foam composition and polyurethane foam including a cured product thereof.

However, the object to be achieved by the present invention is not limited to the above-mentioned object, and other objects not mentioned herein will be clearly understood by those skilled in the art from the following description.

### Technical Solution

One embodiment of the present invention provides a polyurethane foam composition containing: a polyol mixture containing a first polyol-based compound having a glass transition temperature of -50°C or lower, a second polyol-based compound having a weight-average molecular weight of 5,000 g/mol to 30,000 g/mol and containing at least three functional groups reactive with an isocyanate group, and a third polyol-based compound having a heat release capacity of 500 J/g-K or less; an isocyanate-based curing agent; and a filler, wherein the filler is contained in an amount of 10 parts by weight to 20 parts by weight based on 100 parts by weight of the polyol mixture.

Another embodiment of the present invention provides polyurethane foam including a cured product of the polyurethane foam composition.

### Advantageous Effects

The polyurethane foam composition according to one embodiment of the present invention may provide polyurethane foam having low density while being sucked at high suction pressure.

Since the polyurethane foam according to one embodiment of the present invention is sucked at high suction pressure, it may facilitate the process of laminating a tape using a vacuum suction plate during an automated process, and may be conveniently transferred.

When the polyurethane foam according to one of the present invention is applied between battery cells, it may exhibit excellent dimensional stability against the volume change of the cell, an excellent stress absorption ability to absorb vibration and shock, excellent resilience, and high fire resistance.

Effects of the present invention are not limited to the above-described effects, and effects not mentioned herein will be clearly understood by those skilled in the art from the present specification and the accompanying drawings.

### Best Mode

Throughout the present specification, it is to be understood that when any part is referred to as "including" any component, it does not exclude other components, but may further include other components, unless otherwise specified.

Throughout the present specification, the unit "parts by weight" may refer to the ratio of weight between components.

Throughout the present specification, "A and/or B" means "A and B" or "A or B".

Throughout the present specification, the "weight-average molecular weight" and "number-average molecular weight" of any compound may be calculated using the molecular weight and molecular weight distribution of the compound. Specifically, the molecular weight and molecular weight distribution of the compound may be obtained by: placing tetrahydrofuran (THF) and the compound in a 1-ml glass vial to prepare a test sample in which the concentration of the compound is 1 wt%; filtering a standard sample (polystyrene) and the test sample through a filter (pore size: 0.45 mm); injecting each of the sample filtrates into a GPC injector; and comparing the elution time of the test sample with a calibration curve of the standard sample. At this time, Infinity II 1260 (Agilent Technologies, Inc.) may be used as a measurement instrument, and the flow rate and the column temperature may be set at 1.00 mL/min and 40.0°C, respectively.

Throughout the present specification, "glass transition temperature (Tg)" may be measured using differential scanning calorimetry (DSC). Specifically, the glass transition temperature may be measured using a differential scanning calorimeter (DSC, DSC-STAR3, METTLER TOLEDO) by performing a two-cycle experiment in a temperature range of -60°C to 150°C while heating a sample in the temperature range at a heating rate of 5°C/min, and then measuring the midpoint of the DSC curve plotted from points having thermal changes.

Throughout this specification, the viscosity of any compound may be a value measured with a Brookfield viscometer at a temperature of 25°C.

Hereinafter, the present specification will be described in more detail.

One embodiment of the present invention provides a polyurethane foam composition containing: a polyol mixture containing a first polyol-based compound having a glass transition temperature of -50°C or lower, a second polyol-based compound having a weight-average molecular weight of 5,000 g/mol to 30,000 g/mol and containing at least three functional groups reactive with an isocyanate group, and a third polyol-based compound having a heat release capacity of 500 J/g-K or less; an isocyanate-based curing agent; and a filler, wherein the filler is contained in an amount of 10 parts by weight to 20 parts by weight based on 100 parts by weight of the polyol mixture.

The polyurethane foam composition according to one embodiment of the present invention may provide polyurethane foam having excellent suction properties.

Hereinafter, each of the components contained in the polyurethane foam composition according to one embodiment of the present invention will be described in detail.

### (1) First Polyol-Based Compound

According to one embodiment of the present invention, the first polyol-based compound may have a glass transition temperature of -50°C or lower. Specifically, the glass transition temperature of the first polyol-based compound may be -80°C to -50°C, or -75°C to -60°C. When the glass transition temperature of the first polyol-based compound is within the above-described range, the polyurethane foam including a cured product of the polyurethane foam composition may have high rebound properties and compression recovery properties.

In addition, the first polyol-based compound may have a viscosity of 2,000 mPa-s or less at 25°C. Specifically, the viscosity of the first polyol-based compound at 25 °C may be 200 mPa-s to 2,000 mPa-s. When the viscosity of the first polyol-based compound is controlled within in the above-described range, there is an advantage in that it is possible to increase the dispersibility and workability of raw materials during the production of the polyurethane foam.

According to one embodiment of the present invention, the first polyol-based compound may be a polyether-based polyol having a glass transition temperature of -50°C or lower and a polyalkylene oxide unit, and the viscosity thereof at 25°C may be 2,000 mPa-s or less.

In addition, the first polyol-based compound may contain at least two functional groups reactive with an isocyanate group. The functional group reactive with the isocyanate group may refer to a functional group that forms a urethane bond with the isocyanate group. Specifically, the functional group reactive with the isocyanate group may be a hydroxyl group, an amine group, a thiol group or a carboxyl group. More specifically, the first polyol-based compound may have hydroxyl groups bonded to both ends of the main chain, and at least one of a hydroxyl group, an amine group, a thiol group, and a carboxyl group may be included in the side chain of the first polyol-based compound.

According to one embodiment of the present invention, the first polyol-based compound may be a polymer of a first mixture containing at least one of an ether-based polyol, an ester-based polyol, and a chain extender.

As the ether-based polyol, the ester-based polyol and the chain extender, those that are used in the art may be used. For example, as the ether-based polyol, polypropylene glycol, polytetramethylene glycol, or the like may be used, and as the ester-based polyol, polycaprolactone polyol or the like may be used, and as the chain extender, butanediol or the like may be used.

According to one embodiment of the present invention, the content of the first polyol-based compound may be 60 parts by weight to 75 parts by weight based on 100 parts by weight of the polyol mixture. Specifically, the content of the first polyol-based compound may be 62.5 parts by weight to 72.5 parts by weight, 65 parts by weight to 70 parts by weight, or 67 parts by weight to 73 parts by weight, based on 100 parts by weight of the polyol mixture. When the content of the first polyol-based compound is controlled within the above-described range, it is possible to improve the compression recovery properties of the polyurethane foam including a cured product of the polyurethane foam composition.

In the present specification, the term "polyol mixture" may refer to the entire polyol-based material including the first polyol-based compound, the second polyol-based compound, and the third polyol-based compound. In addition, the term "polyol mixture" may also refer to a mixture composed of the first polyol-based compound, the second polyol-based compound, and the third polyol-based compound.

### (2) Second Polyol-Based Compound

According to one embodiment of the present invention, the second polyol-based compound may contain at least three functional groups reactive with an isocyanate group. The functional group reactive with the isocyanate group may refer to a functional group that forms a urethane bond with the isocyanate group. Specifically, the functional group reactive with the isocyanate group may be a hydroxyl group, an amine group, a thiol group, or a carboxyl group.

According to one embodiment of the present invention, the second polyol-based compound may have a branched chain structure. Specifically, the second polyol-based compound may be a compound in which hydroxyl groups are bonded to both ends thereof and one or more functional groups reactive with an isocyanate group are bonded to the main chain to form a side chain. Specifically, the second polyol-based compound contains at least three functional groups reactive with an isocyanate group, which makes it possible to form a denser network structure during urethane polymerization, compared to a polyol having a linear structure in which hydroxyl groups are bonded only to both ends.

According to one embodiment of the present invention, the weight-average molecular weight of the second polyol-based compound may be 5,000 g/mol to 30,000 g/mol. Specifically, the weight-average molecular weight of the second polyol-based compound may be 7,000 g/mol to 28,000 g/mol, 10,000 g/mol to 25,000 g/mol, 12,000 g/mol to 20,000 g/mol, or 15,000 g/mol to 18,000 g/mol. The second polyol-based compound serves as the skeleton of the polyurethane foam, and when the weight-average molecular weight of the second polyol-based compound is within the above-described range, the ability of the polyurethane foam to recover from compression may be effectively improved.

According to one embodiment of the present invention, the second polyol-based compound may have a viscosity of 20,000 mPa-s to 200,000 mPa-s at 25°C. Specifically, the viscosity of the second polyol-based compound at 25°C may be 30,000 mPa·s to 180,000 mPa-s, 35,000 mPa-s to 150,000 mPa·s, 50,000 mPa·s to 120,000 mPa·s, 60,000 mPa·s to 100,000 mPa·s, or 35,000 mPa-s to 70,000 mPa-s. When the viscosity of the second polyol-based compound is within the above-described range, it is possible to uniformly disperse the second polyol-based compound with other materials in the polyurethane foam composition, thereby producing polyurethane foam having uniform quality.

According to one embodiment of the present invention, the second polyol-based compound may be a polyether-based polyol, which contains at least three functional groups reactive with an isocyanate group and has a weight-average molecular weight of 5,000 g/mol to 30,000 g/mol and a viscosity of 20,000 mPa·s to 200,000 mPa·s at 25°C.

According to one embodiment of the present invention, the second polyol-based compound may be a polymer of a second mixture containing: a polyether-based polyol; a polyfunctional isocyanate-based compound; and a chain extender containing at least three functional groups reactive with an isocyanate group.

According to one embodiment of the present invention, the polyether-based polyol in the second mixture may be derived from polyalkylene oxide. Specifically, the polyether-based polyol in the second mixture may include at least one of polyethylene glycol (PEG), polypropylene glycol (PPG), a polyethylene glycol-polypropylene glycol (PEG-PPG) copolymer, and poly(tetramethylene ether)glycol (PTMG).

According to one embodiment of the present invention, the molar ratio between the polyether-based polyol and the polyfunctional isocyanate-based compound in the second mixture may be 1:0.5 to 1:1. Specifically, the molar ratio between the polyether-based polyol and the polyfunctional isocyanate-based compound in the second mixture may be 1:0.6 to 1:0.95, or 1:0.65 to 1:0.9.

When the content of the polyfunctional isocyanate-based compound in the second mixture is within the above-described range, it is possible to increase the compatibility of the polyfunctional isocyanate-based compound with other components by preventing an excessive increase in viscosity in the production of the second polyol-based compound, and to prevent gelling.

According to one embodiment of the present invention, the polyfunctional isocyanate-based compound in the second mixture may contain two isocyanate groups. In addition, the polyfunctional isocyanate-based compound in the second mixture may include at least one of an aromatic polyfunctional isocyanate compound, an alicyclic polyfunctional isocyanate compound, and an aliphatic polyfunctional isocyanate compound.

Specifically, the aromatic polyfunctional isocyanate compound may include at least one of 2,4-tolylene diisocyanate (TDI), 2,6-tolylene diisocyanate (TDI), m-phenylene diisocyanate, p-phenylene diisocyanate, 4,4'-methylene diphenyl diisocyanate (MDI), 2,4'-methylene diphenyl diisocyanate (MDI), 2,2'-methylene diphenyl diisocyanate (MDI), xylylene diisocyanate (XDI), 3,3'-dimethyl-4,4'-biphenylene diisocyanate, and 3,3'-dimethoxy-4,4'-biphenylene diisocyanate.

In addition, the alicyclic polyfunctional isocyanate compound may include at least one of 4,4'-methylene dicyclohexyl diisocyanate (H12-MDI), cyclohexane-1,4-diisocyanate, isophorone diisocyanate (IPDI), dicyclohexylmethane-4,4'-diisocyanate, hydrogenated xylylene diisocyanate (H6-XDI), and methylcyclohexane diisocyanate.

In addition, the aliphatic polyfunctional isocyanate compound may include at least one of butane-1,4-diisocyanate, hexamethylene diisocyanate (HDI), isopropylene diisocyanate, methylene diisocyanate, and lysine isocyanate.

According to one embodiment of the present invention, the molar ratio between the polyether-based polyol and the chain extender in the second mixture may be 1:0.1 to 1:0.45.

Specifically, the molar ratio between the polyether-based polyol and the chain extender may be 1:0.2 to 1:0.4, or 1:0.25 to 1:0.35, more specifically 1:0.3.

When the content of the chain extender in the second mixture is within the above-described range, there is an advantage that it is possible to achieve excellent compression recovery performance by forming an appropriate crosslink in the polyurethane foam.

According to one embodiment of the present invention, the chain extender in the second mixture may be a compound containing at least three functional groups reactive with an isocyanate group. In addition, the number of the functional groups contained in the chain extender may be 3 to 10, or 3 to 5.

According to one embodiment of the present invention, the chain extender in the second mixture may include at least one of the following compounds:

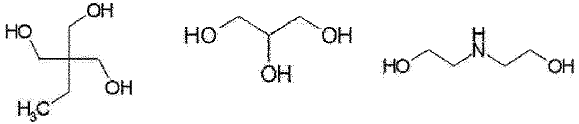

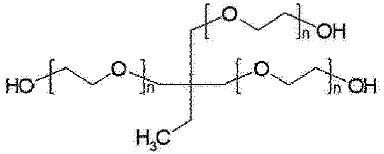

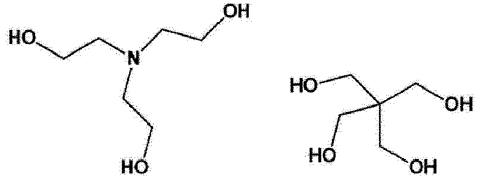

According to one embodiment of the present invention, the content of the second polyol-based compound may be 5 parts by weight to 20 parts by weight based on 100 parts by weight of the polyol mixture. Specifically, the content of the second polyol-based compound may be 5 parts by weight to 15 parts by weight based on 100 parts by weight of the polyol mixture.

When the content of the second polyol-based compound is within the above-described range, it is possible to maintain the soft properties of the polyurethane foam formed using the polyurethane foam composition and to achieve excellent rebound properties of the polyurethane foam. In addition, when the content of the second polyol-based compound is controlled within the above-described range, it is possible to ensure the durability of the polyurethane foam by minimizing loss of the ability to recover from compression.

### (3) Third Polyol-Based Compound

According to one embodiment of the present invention, the third polyol-based compound may be either a polyol having a heat release capacity of 500 J/g-K or less, or a polymer of a third mixture containing a polyol having a heat dissipation capacity of 500 J/g-K or less and a polyfunctional isocyanate-based compound.

According to one embodiment of the present invention, the third polyol-based compound itself may have flame-retardant properties, thereby improving the flame-retardant performance of the polyurethane foam.

According to one embodiment of the present invention, the third polyol-based compound may include at least one of a polycarbonate diol having has a heat release capacity of 500 J/g-K or less, and a polydimethylsiloxane diol having a heat release capacity of 500 J/g-K or less.

According to one embodiment of the present invention, the polyol having a heat release capacity of 500 J/g-K or less may be a polyol having a limiting oxygen index value of 21% or more.

According to one embodiment of the present invention, the third polyol-based compound may be a polymer formed using a third mixture containing a polyol having a heat release capacity of 500 J/g-K or less and a polyfunctional isocyanate-based compound. That is, the polymer may have a heat release capacity of 500 J/g-K or less. In addition, the third polyol-based compound may be a polymer formed using a third mixture containing a polyol having a heat release capacity of 500 J/g-K or less and a limiting oxygen index value of 21% or more, and a polyfunctional isocyanate-based compound. That is, the polymer formed using the third mixture may have a heat release capacity of 500 J/g-K or less and a limiting oxygen index value of 21% or more.

According to one embodiment of the present invention, the third polyol-based compound may satisfy a heat release capacity of 500 J/g-K or less, or satisfy a heat release capacity of 500 J/g-K or less and a limiting oxygen index value of 21% or more, and thus the third polyol-based compound itself may have flame-retardant properties, thereby improving the flame-retardant performance of the polyurethane foam.

According to one embodiment of the present invention, the polyfunctional isocyanate-based compound in the third mixture may serve to improve the compatibility of the third polyol-based compound with other components. In addition, the polyfunctional isocyanate-based compound in the third mixture may be the same material as the polyfunctional isocyanate-based compound in the second mixture.

According to one embodiment of the present invention, in the third mixture, the molar ratio between the polyol having a heat release capacity of 500 J/g-K or less and the polyfunctional isocyanate-based compound may be 1:0.05 to 1:0.25. Specifically, the molar ratio between the polyol having a heat release capacity of 500 J/g-K or less and the polyfunctional isocyanate-based compound may be 1:0.05 to 1:0.15, or 1:0.07 to 0.12, more specifically 1:0.1.

When the content of the polyfunctional isocyanate-based compound in the third mixture is within the above-described range, the polymer formed using the third mixture may have improved compatibility with other compositions.

According to one embodiment of the present invention, the content of the third polyol-based compound may be 15 parts by weight to 50 parts by weight based on 100 parts by weight of the polyol mixture. Specifically, the content of the third polyol-based compound may be 25 parts by weight to 40 parts by weight, or 25 parts by weight to 35 parts by weight, based on 100 parts by weight of the polyol mixture.

When the content of the third polyol-based compound is controlled within the above-described range, it is possible to ensure compatibility with other materials in the polyurethane foam composition. In addition, when the content of the third polyol-based compound is within the above-described range, there is an advantage in that it is possible to achieve flame retardant properties corresponding to a V-0 on the UL-94 vertical flame retardant test for the polyurethane foam, and to minimize the hardening of the polyurethane foam.

According to one embodiment of the present invention, the viscosity of the third polyol-based compound may be 1,000 mPa·s to 7,000 mPa·s, or 1,500 mPa-s to 5,000 mPa-s. When the viscosity of the third polyol-based compound is within the above range, there is an advantage in that it is possible to ensure the compatibility of the third polyol-based compound with other components in the polyurethane foam composition.

According to one embodiment of the present invention, the total content of the second polyol-based compound and the third polyol-based compound may be 30 parts by weight to 60 parts by weight based on 100 parts by weight of the polyol mixture. Specifically, the total content of the second polyol-based compound and the third polyol-based compound may be 30 parts by weight to 50 parts by weight, or 30 parts by weight to 45 parts by weight, or 30 parts by weight to 40 parts by weight, based on 100 parts by weight of the polyol mixture.

When the total content of the second polyol-based compound and the third polyol-based compound is controlled within the above-described range, it is possible to effectively improve the flame retardant properties and compression properties of the polyurethane foam including a cured product of the polyurethane foam composition.

### (4) Filler

The polyurethane foam composition according to one embodiment of the present invention contains a filler. The filler contained in the polyurethane foam composition may increase the hardness of the polyurethane foam and the suction pressure at which the polyurethane foam is sucked, and may maintain compression force deformation (CFD) of the polyurethane foam at an appropriate level.

According to one embodiment of the present invention, the filler may include at least one of silicon dioxide, silica, ATH, and calcium carbonate. In particular, the filler may preferably include calcium carbonate, but is not limited thereto.

According to one embodiment of the present invention, the filler may be contained in an amount of 10 parts by weight to 20 parts by weight, specifically 12 parts by weight to 18 parts by weight, based on 100 parts by weight of the polyol mixture. When the filler is contained in an amount within the above range, a polyurethane foam product may have excellent workability in an automated process due to high vacuum suction pressure while the appropriate hardness thereof is maintained. In addition, in this case, an appropriate level of CFD may be achieved while the polyurethane foam has reduced compression set, a smooth surface and an excellent appearance.

Compression force deformation (CFD) is a parameter indicating a rebound force generated when a measurement target is compressed. Specifically, CFD can be evaluated by cutting the polyurethane foam into a size of 5 cm * 5 cm and measuring a rebound force generated when the cut polyurethane foam is compressed using a device such as UTM. An appropriate value of CFD may be about 0.05 to 0.18 kg/cm². When the polyurethane foam has an appropriate level of CFD value, the polyurethane foam applied to battery cells may maintain the volume of the battery cells at a constant level by buffering the volume change caused by battery expansion, thereby improving product stability.

### (5) Foam Stabilizer and Foam-Forming Gas Source

The polyurethane foam composition according to an embodiment of the present invention may contain a foam stabilizer. As the foam stabilizer that is added to create a foam shape, any foam stabilizer commonly used in the production of urethane foam may be applied. Specifically, the foam stabilizer may include at least one of a silicone-based foam stabilizer, an organosilicon-based foam stabilizer, a fluorine-based foam stabilizer, an ionic surfactant, and a non-ionic surfactant. More specifically, the foam stabilizer may include polyalkyloxide-substituted polydimethylsiloxane. However, the foam stabilizer is not limited thereto, and any foam stabilizer commonly used in the art may be used. As the foam stabilizer is used, a foam-foaming gas may form a suitable foam structure for the polyurethane foam and maintain stable dispersibility of the gas upon curing into the polyurethane foam, thereby forming pores having a uniform size and distribution.

According to one embodiment of the present invention, the content of the foam stabilizer may be 0.5 parts by weight to 10 parts by weight, 1 part by weight to 5 parts by weight, or 2 parts by weight to 4 parts by weight, based on 100 parts by weight of the polyol mixture.

The polyurethane foam composition according to one embodiment of the present invention may contain a foam-forming gas source. The foam-forming gas source may interact with the foam stabilizer to form pores in the polyurethane foam by foaming.

The foam-forming gas is a gas that does not adversely affect the reaction between the polyol-based compound and isocyanate, and as the foaming-forming gas, an inert gas such as dry air and/or nitrogen gas may be used, but the foaming-forming gas is not limited thereto. The foam-forming gas source may be a liquid gas, for example, liquid nitrogen.

The content of the foam-forming gas source may vary depending on the desired density of the polyurethane foam.

### (6) Isocyanate-Based Curing Agent

According to one embodiment of the present invention, the isocyanate-based curing agent may form a polyurethane network by forming a urethane bond with the first to third polyol-based compounds.

According to one embodiment of the present invention, the isocyanate-based curing agent is a compound containing two or three or more isocyanate groups, and may include at least one of an aromatic isocyanate compound, an alicyclic isocyanate compound, and an aliphatic isocyanate compound. The aromatic isocyanate compound, alicyclic isocyanate compound and aliphatic isocyanate compound as the isocyanate-based curing agent may be the same materials as the aromatic isocyanate compound, alicyclic isocyanate compound and aliphatic isocyanate compound in the above-described second mixture, respectively.

According to one embodiment of the present invention, the content of the isocyanate-based curing agent may be 20 parts by weight to 35 parts by weight based on 100 parts by weight of the polyol mixture. Specifically, the content of the isocyanate-based curing agent may be 25 parts by weight to 32.5 parts by weight, 27.5 parts by weight to 30 parts by weight, or 28 parts by weight to 32 parts by weight, based on 100 parts by weight of the polyol mixture. When the content of the isocyanate-based curing agent is controlled within the above-described range, the reaction that forms a urethane bond with the first to third polyol-based compounds contained in the polyol mixture may be effectively performed.

### (7) Other Additives

According to one embodiment of the present invention, the polyurethane foam composition may further contain an additive including at least one of a flame retardant, a catalyst, a crosslinking agent, and a dye.

According to one embodiment of the present invention, the flame retardant may include a halogen-free flame retardant. Specifically, the flame retardant may include a solid or liquid halogen-free phosphorus-based flame retardant. Specifically, according to one embodiment of the present invention, the flame retardant may include at least one selected from the group consisting of phosphate, phosphonate, phosphinate, phosphine oxide, and phosphazene. Specifically, the flame retardant may be aluminum phosphate. However, the present invention is not limited thereto, and a phosphorus-based flame retardant commonly used in the art may be used.

The halogen-free phosphorus-based flame retardant may react with a combustible material to form a carbonized layer on the polymer surface, which may block oxygen required for combustion, thereby increasing the flame retardancy of the polyurethane foam. In addition, the halogen-free phosphorus-based flame retardant may act to dehydrate and carbonize by reaction with the oxygen element in the polymer, and the radicals generated by the decomposition of phosphoric acid may serve to stabilize -OH and -H, which are active radicals generated by combustion.

According to one embodiment of the present invention, the flame retardant may include a mixture of the phosphorus-based flame retardant and flame-retardant melamine powder. Specifically, the flame-retardant melamine powder may be melamine cyanurate (MCA).

According to one embodiment of the present invention, the content of the flame retardant may be 20 parts by weight to 50 parts by weight based on 100 parts by weight of the polyol mixture. Specifically, the content of the flame retardant may be 20 parts by weight to 40 parts by weight, 21 parts by weight to 30 parts by weight, or 25 parts by weight to 30 parts by weight, based on 100 parts by weight of the polyol mixture.

When the content of the flame retardant is within the above-described range, it is possible to obtain the effect of lowering the heat release capacity of the polyol-based compound in the polyurethane foam composition and increasing the limiting oxygen index. In addition, when the content of the flame retardant is within the above-described range, the flame retardant may help to form the polymer of the polyurethane foam into carbide (char) during combustion, and may effectively remove radicals generated during combustion. Furthermore, when the content of the flame retardant is within the above-described range, it is possible to ensure flame retardancy while minimizing deterioration in the compression recovery performance of the polyurethane foam.

According to one embodiment of the present invention, the polyurethane foam composition may contain expandable graphite to further improve the flame retardancy of the polyurethane foam.

According to one embodiment of the present invention, the size of the expandable graphite may be 150 um to 300 um. Specifically, the size of the expandable graphite may be 165 um to 300 um, 180 um to 300 um, or 200 um to 300 um. The expandable graphite has a layered crystal structure, and when heated, it may expand to a size 20 times to 400 times the original size thereof to induce the formation of porous carbides during combustion. When the size of the expandable graphite is controlled within the above-described range, it is possible to effectively improve the flame retardant properties of the polyurethane foam. Specifically, when the size of the expandable graphite is within the above-described range, the polyurethane foam may have flame retardant properties corresponding to a rating of V-0 on the UL-94 vertical flame retardant test. More specifically, the polyurethane foam satisfies the flame retardant properties corresponding to the V-0 rating on the UL-94 vertical flame retardant test, and at the same time, the total after-flame time after first flame application for 5 specimens in the UL-94 vertical flame retardant test may be less than 2 seconds. That is, the polyurethane foam has the advantage of having excellent flame retardant properties corresponding to a rating of V-0 on the UL-94 vertical flame retardant test.

According to one embodiment of the present invention, the size of the expandable graphite may mean the longest length among the lengths from one end to the other end of the expandable graphite. In addition, the expandable graphite may include a plurality of expandable graphite particles, and the size of the expandable graphite may be the average value of the sizes of the plurality of expandable graphite particles.

According to one embodiment of the present invention, the size of the expandable graphite may be measured using any selected particle size measurement method known in the art. For example, the expandable graphite may be imaged using a scanning electron microscope (SEM), and the size of the expandable graphite may be measured using the image.

According to one embodiment of the present invention, the content of the expandable graphite may be greater than 0 parts by weight and 50 parts by weight based on 100 parts by weight of the polyol mixture. Specifically, the content of the expandable graphite may be 21 parts by weight to 40 parts by weight, or 21 parts by weight to 30 parts by weight, based on 100 parts by weight of the polyol mixture. When the content of the expandable graphite is controlled within the above range, it is possible to improve the flame retardancy of the polyurethane foam without reducing the compression recovery force of the polyurethane foam.

According to one embodiment of the present invention, the weight ratio between the flame retardant and the expandable graphite may be 1: 0.8 to 1:1.2. Specifically, the weight ratio between the flame retardant and the expanded graphite may be 1:0.9 to 1:1.1, more specifically 1:1.

When the weight ratio between the flame retardant and the expanded graphite is controlled within the above-described range, the polyurethane foam formed using the polyurethane foam composition may have flame retardant properties corresponding to the V-0 rating. In addition, the polyurethane foam may have excellent flame retardant properties among flame retardant properties corresponding to the V-0 rating.

According to one embodiment of the present invention, the catalyst may be an amine-based catalyst and/or a metal catalyst. Specifically, the amine-based catalyst may include at least one of a monoamine compound, a diamine compound, a triamine compound, a polyamine compound, a cyclic amine compound, an alcohol amine compound, and an ether amine compound. In addition, the metal catalyst may include at least one of a nickel-based compound, an organic tin compound, an organic bismuth compound, an organic lead compound, an organic nickel compound, and an organic zinc compound. Specifically, according to one embodiment of the present invention, the catalyst may be dibutyltin dilaurate.

According to one embodiment of the present invention, the content of the catalyst may be 0.5 parts by weight to 10 parts by weight, 1 part by weight to 10 parts by weight, or 1 part by weight to 5 parts by weight, based on 100 parts by weight of the polyol mixture.

According to one embodiment of the present invention, the crosslinking agent may be a low-molecular-weight compound, which has two or more and four or less active hydrogen-containing groups capable of reacting with an isocyanate group and has a number-average molecular weight of 50 g/mol to 800 g/mol. Specifically, the crosslinking agent may include at least one of ethylene glycol, diethylene glycol, propylene glycol, dipropylene glycol, 1,4-butanediol, 1,6-hexanediol, neopentyl glycol, glycerin, trimethylolpropane, triethanolamine, and pentaerythritol.

According to one embodiment of the present invention, the content of the crosslinking agent may be 1 part by weight to 20 parts by weight, or 5 parts by weight to 15 parts by weight, based on 100 parts by weight of the polyol mixture.

According to an exemplary embodiment of the present invention, the dye may display the color of the polyurethane foam including the cured product of the polyurethane foam composition. As the dye, any dye used in the art may be used without limitation. For example, carbon black may be used.

The content of the dye may be 1 part by weight to 3 parts by weight based on 100 parts by weight of the polyol mixture. When the content of the dye is controlled within the above-mentioned range, it is possible to impart a color to the polyurethane foam without adversely affecting the physical properties of the polyurethane foam.

Another embodiment of the present invention provides polyurethane foam including a cured product of the polyurethane foam composition.

**One** embodiment of the present invention provides polyurethane foam formed using the polyurethane foam composition. A method of producing polyurethane foam using the polyurethane foam composition may be performed using a generally known method for producing polyurethane foam.

One embodiment of the present invention provides polyurethane foam which is sucked at a suction pressure of 50 kPa or more, 50 kPa or more and 95 kPa or less, or 60 kPa to 95 kPa. When the polyurethane foam is sucked at a suction pressure within the above range, the polyurethane foam may have excellent workability in an automated process, and the suction pressure may correspond to an appropriate pressure in the process of assembling a battery pack.

According to one embodiment of the present invention, the polyurethane foam may have flame retardant properties corresponding to a rating of V-0 on the UL-94 vertical flame retardant test. Therefore, the flame-retardant polyurethane foam according to one embodiment of the present invention has the advantage of having excellent flame-retardant properties.

In the UL-94 vertical flame retardant test, samples, each having a width of 125 ± 25 mm, a length of 13.0 ± 0.5 mm and a thickness of 2.0 mm, are prepared. Five specimens, each consisting of a set of two samples prepared as described above, are prepared and stored at a temperature of 23±2°C and a humidity of 50±5% humidity. Each specimen was burned twice for 10 seconds per each time using a blue flame of methane gas having a calorific value of 37 MJ/m³ (flame height: 20 mm; distance between the lower part of the specimen and the end of the burner: 9.5 mm). After 10 seconds of the second burning, the time (t2) at which the flame disappears and the time (t3) to which flameless burning lasts are measured, and ratings are given according to the criteria shown in Table 1 below.

**[Table 1]**

| UL-94 V Test Rating | V-0 | V-1 | V-2 |
|---|---|---|---|
| Flame out time (t1 or t2) after first or second burning for each specimen | ≤ 10 | ≤ 30 | ≤ 30 |
| Sum (t1+t2) of flame out times after burning for five specimens | ≤ 50 | ≤ 250 | ≤ 250 |
| Sum (t2+t3) of flame out time and glowing after second burning for each specimen | ≤ 30 | ≤ 60 | ≤ 60 |
| Whether flaming debris or fireballs fall and burn the cotton located at | NO | NO | YES |
| 305 mm below the specimen. | | | |

According to one embodiment of the present invention, when the polyurethane foam is subjected to the UL-94 vertical flame retardant test, the total after-flame time after first flame application for five specimens may be less than 2 seconds. Specifically, when the polyurethane foam is subjected to the UL-94 vertical flame retardant test, the total after-flame time after 10 seconds of burning for five specimens may be less than 2 seconds. According to one embodiment of the present invention, when the polyurethane foam is subjected to the UL-94 vertical flame retardant test, the total after-flame time after second flame application for five specimens may be less than 5 seconds. Specifically, when the polyurethane foam is subjected to the UL-94 vertical flame retardant test, the total after-flame time after second burning for five specimens when burned twice for 10 seconds per each time may be less than 5 seconds.

Thus, the polyurethane foam according to one embodiment of the present invention has the advantage of having excellent flame retardant properties among flame retardant properties corresponding to a rating of V-0 on the UL-94 vertical flame retardant test.

According to one embodiment of the present invention, the density of the polyurethane foam may be 0.1 g/cm³ to 0.5 g/cm³, 0.1 g/cm³ to 0.3 g/cm³, or 0.1 g/cm³ to 0.2 g/cm³. When the density of the polyurethane foam is controlled in the above range, the polyurethane foam, when applied between battery cells, may be effectively sucked due to its excellent adhesion and rebound properties, may economically reduce the cost, and may contribute to reducing the weight of the battery.

According to one embodiment of the present invention, the CFD of the polyurethane foam may be 0.05 to 0.18 kg/cm². When the CFD of the polyurethane foam is within the above range, the polyurethane foam, when applied between battery cells, may maintain the volume of the battery cells at a constant level by buffering the volume change caused by battery expansion, thereby improving product stability.

According to one embodiment of the present invention, the thickness of the polyurethane foam may be 0.1 mm to 10 mm. Specifically, the thickness of the polyurethane foam may be 0.1 mm to 5 mm. When the thickness of the polyurethane foam is controlled within the above range, the polyurethane foam, when applied to a device, may have excellent adhesion to the device and may easily absorb shock.

According to one embodiment of the present invention, the polyurethane foam may be used as a packing material. In addition, according to one embodiment of the present invention, the polyurethane foam may be used as a sealing material between vehicle battery cells.

Hereinafter, the present invention will be described in detail with reference to examples. However, the examples according to the present invention may be modified into various different forms, and the scope of the present invention is not interpreted as being limited to the examples described below. The examples of the present specification are provided to more completely explain the present invention to those skilled in the art.

### Mode for Invention

### Production of Polyol-Based Compounds

### Production Example 1: Production of First Polyol-Based Compound

A mixture containing 50 parts by weight of a polypropylene glycol having a number-average molecular weight of 4,000 g/mol, a viscosity of 1,300 mPa-s, and a heat release capacity of 553 J/g-K, and 50 parts by weight of a polypropylene glycol having a number-average molecular weight of 2,000 g/mol, a viscosity of 300 mPa-s, and a heat release capacity of 553 J/g-K was prepared and then polymerized to produce a first polyol-based compound having a viscosity of 730 mPa-s and a glass transition temperature of -71°C.

### Production Example 2: Production of Second Polyol-Based Compounds

10 kg of a PEG-PPG copolymer (SC2204; KPX Chemical) having a number average molecular weight of 2,000 g/mol, and H12-MDI (Evonik) and glycerol at the respective molar ratios relative to SC2204 shown in Table 2 below, were introduced into a reactor under nitrogen reflux. The contents in the reactor were heated to 60°C, and 40 ppm of a catalyst (dibutyltin dilaurate) was added thereto, followed by stirring for 4 hours. When the disappearance of the isocyanate peak was confirmed through FT-IR, the reaction was terminated, thus producing the second polyol-based compounds shown in Table 2 below.

**[Table 2]**

| | SC2204 | Molar ratio of H12-MDI relative to SC2204 | Molar ratio of glycerol relative to SC2204 | Viscosity (mPa·s) | Mn (g/mol) | Mw (g/mol) | PDI |
|---|---|---|---|---|---|---|---|
| Production Example 2 | 1 | 0.9 | 0.3 | 65,000 | 5,770 | 15,000 | 2.6 |
| Production Example 2-1 | 1 | 0.75 | 0.3 | 38,000 | 4,000 | 10,000 | 2.5 |
| Production Example 2-2 | 1 | 0.65 | 0.3 | 38,000 | 3,480 | 8,000 | 2.3 |
| Production | 1 | 0.9 | 0 | 68,000 | 7,500 | 15,000 | 2.0 |
| Example 2-3 | | | | | | | |
| Production Example 2-4 | 1 | 1.1 | 0.5 | - | - | - | - |
| Production Example 2-5 | 1 | 1.1 | 0.3 | 274,000 | 8,000 | 21,000 | 2.6 |

In Table 2 above, the molar ratio of each of H12-MDI to glycerol is relative to 1 mole of SC2204. As can be seen in Table 2 above, in Production Example 2-3, a polyol having a linear structure was formed because a chain extender (glycerol) having three or more functional groups was not used. In addition, in Production Example 2-4, the content of the polyfunctional isocyanate-based compound (H12-MDI) and the content of the chain extender (glycerol) having three or more functional groups were excessively high, causing a gelling phenomenon, and hence the polyol-based compound was not formed. In addition, in Production Example 2-5, the content of the polyfunctional isocyanate-based compound (H12-MDI) was high, causing a great increase in the viscosity, and hence a polyol difficult to mix with other compositions was formed.

### Production Example 3: Production of Third Polyol-Based Compounds

10 kg of polycarbonate diol (T5650E; Asahi Kasei Chemical) having a number-average molecular weight of 500 g/mol, and XDI (Takenate 600, Mitsui Chemical) at the respective molar ratios relative to T5650E shown in Table 3 below were introduced into a reactor under nitrogen reflux. The contents in the reactor were heated to 60°C, and 40 ppm of a catalyst (dibutyltin dilaurate) was added thereto, followed by stirring for 4 hours. When the disappearance of the isocyanate peak was confirmed through FT-IR, the reaction was terminated, thus producing third polyol-based compounds having a heat release capacity of 400 J/g-K as shown in Table 3 below.

**[Table 3]**

| | T5650E | Molar ratio of XDI relative to T5650E | Viscosity (mPa·s) | Mn (g/mol) | Mw (g/mol) | PDI | Remarks |
|---|---|---|---|---|---|---|---|
| Production Example 3 | 1 | 0.1 | 3,500 | 1,000 | 2,000 | 2.0 | |
| Production Example 3-1 | 1 | 0.3 | 12,000 | 4,000 | 9,000 | 2.1 | Poorly compatible with other components |

In Table 3 above, the molar ratio of XDI is relative to 1 mole of T5650E. As can be seen from Table 3, in Production Example 3-1, the content of the polyfunctional isocyanate-based compound (XDI) was excessively high, and hence a polyol having an excessively high viscosity was produced, which had poor compatibility with other components. Thus, a phase separation phenomenon occurred, making it difficult to produce flame-retardant polyurethane foam. In addition, in Production Example 3-1, there was a problem in that due to the high self-cohesive force of the produced compound caused by the excessively strong internal hydrogen bonding thereof, the compound was not mixed well with the first polyol-based compound and the second polyol-based compound.

### Example 1: Production of Polyurethane Foam

As a first polyol-based compound, the compound produced in production Example 1 was prepared, and as a second polyol-based compound, the compound produced in production Example 2 was prepared, and as a third polyol-based compound, the compound produced in production Example 3 was prepared.

In addition, as a flame retardant, a mixture of aluminum (Al) phosphate and flame retardant melamine powder (melamine cyanurate; MCA) was prepared, and as a dye, carbon black was prepared. As a foam stabilizer, L-626 (Momentive), which is polyalkyloxide-substituted polydimethylsiloxane, was prepared, and as a catalyst, a LC5615 (Momentive), which is a nickel-based catalyst, was prepared, and as an isocyanate-based curing agent, H12-MDI (Kumho Mitsui Chemicals) was prepared.

Thereafter, 70 parts by weight of the first polyol-based compound, 10 parts by weight of the second polyol-based compound, and 20 parts by weight of the third polyol-based compound were mixed together to prepare a polyol mixture. The polyol mixture was placed in a stainless steel mixer equipped with a stirrer capable of stirring at a high speed of up to 2,000 rpm, and was uniformly stirred at room temperature. In addition, based on 100 parts by weight of the polyol mixture, 25 parts by weight of the flame retardant, 2 parts by weight of carbon black, and 15 parts by weight of calcium carbonate were added to the polyol mixture and dispersed well, and then, based on 100 parts by weight of the polyol mixture, 2 parts by weight of the foam stabilizer and 2 parts by weight of the catalyst were placed in the mixer. The resulting mixture was stirred at high speed for 1 hour or more, thus preparing a uniform composition. At this time, the inflow of water was inhibited as much as possible because it would suppress the urethane forming reaction.

Furthermore, the prepared composition, the isocyanate-based curing agent and liquid nitrogen were simultaneously supplied to the high-speed mixing head by means of a metering pump such that the ratio of the total weight of the prepared composition and the isocyanate-based curing agent to the volume of the liquid nitrogen was 4:1. At this time, the isocyanate-based curing agent was added in an amount of 28 parts by weight based on 100 parts by weight of the polyol mixture, and the liquid nitrogen was supplied depending on the density and hardness of the polyurethane foam composition to be produced. The three components were uniformly mixed together, thus preparing a polyurethane foam composition.

Thereafter, a polyester film was coated with the prepared polyurethane foam composition which was then cured in a curing reactor at a high temperature ranging from about 120 to 150°C, thus producing a polyurethane foam sheet having a density of 0.2 g/cm³ and a thickness of 3.0 mm.

### Examples 2 and 3 and Comparative Example 1

Polyurethane foam sheets were produced in the same manner as in Example 1, except that the amounts of the carbon black, calcium carbonate, foam stabilizer and catalyst, which were used in the preparation of the polyurethane foam composition, were controlled as shown in Table 4 below.

### Example 4

A polyurethane foam sheet was produced in the same manner as in Example 3, except that a polyurethane foam composition was prepared by simultaneously supplying the prepared composition, the isocyanate-based curing agent and liquid nitrogen to the high-speed mixing head such that the ratio of the total weight of the prepared composition and the isocyanate-based curing agent to the volume of the liquid nitrogen was 2:1.

### Measurement of Suction Pressure

Each of the polyurethane foam sheets produced in Examples 1 to 4 and Comparative Example 1 was cut and mounted into the cartridge of an automated system (LG Chem). Then, a vacuum was applied to the vacuum suction pad, and the suction pressure at which the polyurethane foam sheet was sucked to the suction pad was measured. The results of the measurement are shown in Table 4 below.

**[Table 4]**

| | | | Example 1 | Comp. Example 1 | Example 2 | Example 3 | Example 4 |
|---|---|---|---|---|---|---|---|
| Polyol mixture | First polyol-based compound (parts by weight) | Production Example 1 | 70 | 70 | 70 | 70 | 70 |
| | Second polyol-based compound (parts by weight) | Production Example 2 | 10 | 10 | 10 | 10 | 10 |
| | Third polyol-based compound (parts by weight) | Production Example 3 | 20 | 20 | 20 | 20 | 20 |
| Based on 100 parts by weight of polyol mixture | | Flame retardant | 25 | 25 | 25 | 25 | 25 |
| | | Carbon black | 2 | 2 | 2 | 2 | 2 |
| | | Calcium carbonate | 15 | 30 | 20 | 20 | 20 |
| | | Foam stabilizer | 2 | 2 | 2 | 3 | 3 |
| | | Catalyst | 2 | 2 | 2 | 3 | 3 |
| | | Isocyanate-based curing agent | 28 | 28 | 28 | 28 | 28 |
| Polyurethane foam | | Density (g/cm³) | 0.2 | 0.2 | 0.2 | 0.2 | 0.3 |
| | | Suction pressure (kPa) | 75 | 45 | 53 | 58 | 76 |

In Table 4 above, the content of each of the flame retardant, carbon black, calcium carbonate, foam stabilizer, catalyst, and isocyanate-based curing agent is parts by weight based on 100 parts by weight of the polyol mixture. Referring to Table 4 above, it can be confirmed that the polyurethane foam sheet produced in each of Examples 1 to 4 using the polyurethane foam composition containing 15 parts by weight or 20 parts by weight of calcium carbonate was sucked at high suction pressure, suggesting that it had excellent vacuum suction properties.

**On** the other hand, the polyurethane foam sheet produced in Comparative Example 1 using the polyurethane foam composition containing an excessive amount (30 parts by weight) of calcium carbonate was sucked at a suction pressure of only 45 kPa, suggesting that it may not be properly sucked in the battery pack assembly process, causing the problem of product defects.

Therefore, it can be seen that the polyurethane foam composition according to one embodiment of the present invention may provide polyurethane foam having excellent suction properties. In particular, it can be seen that the polyurethane foam is sucked at a suction pressure of about 53 kPa or higher, and thus has excellent suction properties.

## Claims

1. A polyurethane foam composition containing:
a polyol mixture containing a first polyol-based compound having a glass transition temperature of -50°C or lower, a second polyol-based compound having a weight-average molecular weight of 5,000 g/mol to 30,000 g/mol and containing at least three functional groups reactive with an isocyanate group; and a third polyol-based compound having a heat release capacity of 500 J/g-K or less;
an isocyanate-based curing agent; and
a filler,
wherein the filler is contained in an amount of 10 parts by weight to 20 parts by weight based on 100 parts by weight of the polyol mixture.

2. The polyurethane foam composition of claim 1, wherein the filler comprises at least one of silicon dioxide, silica, ATH and calcium carbonate.

3. The polyurethane foam composition of claim 1, wherein the first polyol-based compound is contained in an amount of 60 parts by weight to 75 parts by weight based on 100 parts by weight of the polyol mixture.

4. The polyurethane foam composition of claim 1, wherein the second polyol-based compound is contained in an amount of 5 parts by weight to 20 parts by weight based on 100 parts by weight of the polyol mixture.

5. The polyurethane foam composition of claim 1, wherein the third polyol-based compound is contained in an amount of 15 parts by weight to 50 parts by weight based on 100 parts by weight of the polyol mixture.

6. The polyurethane foam composition of claim 1, wherein the second polyol-based compound is a polymer of a second mixture containing: a polyether-based polyol; a polyfunctional isocyanate-based compound; and a chain extender containing at least three functional groups reactive with an isocyanate group.

7. The polyurethane foam composition of claim 6, wherein a molar ratio between the polyether-based polyol and the chain extender in the second mixture is 1:0.1 to 1:0.45.

8. The polyurethane foam composition of claim 1, wherein the third polyol-based compound is either a polyol having a heat release capacity of 500 J/g-K or less, or a polymer of a third mixture containing a polyol having a heat dissipation capacity of 500 J/g-K or less and a polyfunctional isocyanate-based compound.

9. The polyurethane foam composition of claim 8, wherein a molar ratio between the polyol having a heat release capacity of 500 J/g-K or less and the polyfunctional isocyanate-based compound in the third mixture is 1:0.05 to 1:0.25.

10. The polyurethane foam composition of claim 1, further containing an additive comprising at least one of a flame retardant, a catalyst, a crosslinking agent, and a dye.

11. The polyurethane foam composition of claim 10, wherein the flame retardant is contained in an amount of 20 parts by weight to 50 parts by weight based on 100 parts by weight of the polyol mixture.

12. Polyurethane foam comprising a cured product of the polyurethane foam composition according to claim 1.

13. The polyurethane foam of claim 12, which is sucked at a suction pressure of 50 kPa or more.

14. The polyurethane foam of claim 12, which has a density of 0.1 g/cm³ to 0.5 g/cm³.
